# EUROPEAN PATENT APPLICATION

(11) **EP 2 369 534 A1**
(43) Date of publication of application: **28.09.2011**
(21) Application number: 11156712.9
(22) Date of filing: 03.03.2011
(51) Int. Cl.: G06Q 10/00, G06F 17/30, H04M 1/725, H04L 29/08

(54) **Method, system, apparatus and computer program product for transmitting message**

(30) Priority: 03.03.2010 US 310247 P; 15.04.2010 US 324303 P; 02.03.2011 US 39268
(71) Applicant: HTC Corporation, Taoyuan County 330 (TW)
(72) Inventor: Lee, Po-Yen, Taoyuan City, Taoyuan County 330 (TW); Chen, Chien-Wen, Taoyuan City, Taoyuan County 330 (TW); Yeh, Pai-Chang, Taoyuan City, Taoyuan County 330 (TW); Lian, Li-Wen, Taoyuan City, Taoyuan County 330 (TW)
(74) Representative: 2K Patentanwälte Blasberg Kewitz & Reichel

(57) **Abstract**

A method, a system, an apparatus, and a computer program product suitable for a terminal device to transmit a message through a mobile communication device are provided. In the present method, a message editing interface (300) is displayed, and a message comprising at least one contact and message content, edited on the message editing interface (300) by a user, is received. The edited message is then synchronized to the mobile communication device and the message is transmitted to each of the at least one contact in the message by the mobile communication device.

## Description

### BACKGROUND

To cope with a busy pace of modem life, various mobile devices occupying less space and easy to carry are developed. Taking a personal digital assistant (PDA) as an example, the PDA not only has various functions of a conventional communication device, but also allows a user to write documents, send and receive emails, browse websites, or use instant messaging software through software inbuilt therein. Namely, the mobile device is not only used for making phone calls, but is also used to provide diversified functions as that does of a smaller personal computer, and with development of wireless network techniques, usage of theses functions is not limited by time and space, and for the modem people demanding efficiency, such device has become one of independent tools in daily life.

However, the mobile device requiring features of lightness, slimness, shortness, and smallness is limited in size, and besides a size of a screen disposed on the mobile device is limited, a number of keys disposed thereon and sizes thereof are also limited. Reduction of the screen size may limit batches of information capable of being displayed on the screen, and limiting of the number of the keys, the size of the keys and keypad, and the types of the keypad increases difficulty of text input, and the user often have to spend considerable time and effort to complete editing a message.

### SUMMARY

The present application is directed to a method, a system, and an apparatus for transmitting a message, by which the message edited by a user on a terminal device can be sent through a mobile communication device.

The present application provides a method for transmitting a message, which is suitable for a terminal device to transmit the message through a mobile communication device, where the mobile communication device is connected to the terminal device. In the method, a message editing interface is displayed, and a message edited on the message editing interface by a user is received, where the message comprises at least one contact and message content. Then, the edited message is synchronized to the mobile communication device, and the message content of the message is transmitted to each of the at least one contact by the mobile communication device.

In an example, before the step of displaying the message editing interface, the method further comprises accessing at least one message stored in the mobile communication device, and displaying the accessed at least one message on a message browsing interface. The message browsing interface comprises an adding option used to add a new message and/or a reply option used to reply each of the at least one message.

In an example, after the step of displaying the accessed at least one message on the message browsing interface, the method further comprises receiving a select operation of the adding option or the reply option from the user to display the message editing interface.

In an example, the step of displaying the message editing interface comprises connecting a webpage server through a network, and accessing a webpage comprising the message editing interface from the webpage server for displaying the webpage on a webpage browser.

In an example, the step of synchronizing the edited message to the mobile communication device comprises synchronizing the edited message to the mobile communication device every a predetermined time.

In an example, the step of synchronizing the edited message to the mobile communication device comprises immediately synchronizing the edited message to the mobile communication device when receiving a select operation of a finish option in the message editing interface performed by the user.

The present application provides a system for transmitting a message, which comprises a mobile communication device and a terminal device. The mobile communication device comprises a communication module, and the terminal device comprises a connection interface, a display unit, an input unit, and a processing unit. The connection interface is used for connecting the mobile communication device. The display unit is used for displaying a message editing interface. The input unit is used for receiving a message edited on the message editing interface by a user, where the message comprises at least one contact and message content. The processing unit is coupled to the connection interface, the display unit, and the input unit for synchronizing the edited message to the mobile communication device through the connection interface. The mobile communication device transmits the message content of the message to each of the at least one contact when receiving the message synchronized from the terminal device.

In an example, the system for transmitting the message further comprises a webpage server for providing a webpage comprising the message editing interface. The terminal device further comprises a network connection module, which is coupled to the processing unit and connected to the webpage server through a network, so that the processing unit accesses the webpage comprising the message editing interface from the webpage server and displays it on a webpage browser.

In an example, the webpage server further provides a webpage comprising a message browsing interface. The terminal device is connected to the webpage server through the network connection module, and accesses the webpage comprising the message browsing interface from the webpage server and displays it on the webpage browser. Moreover, the terminal device further accesses at least one message stored in the mobile communication device through the connection interface, and displays the accessed at least one message on the message browsing interface. Where, the message browsing interface comprises an adding option used to add a new message and/or a reply option used to reply each of the at least one message.

In an example, the terminal device receives a select operation of the adding option or the reply option from the user through the input unit to display the message editing interface.

In an example, the processing unit synchronizes the edited message to the mobile communication device every a predetermined time, or immediately synchronizes the edited message to the mobile communication device when the input unit receives a select operation of a finish option in the message editing interface performed by the user.

The present application provides a mobile communication device, which comprises a communication module, a connection interface, and a processing unit. The connection interface is used for connecting a terminal device. The processing unit is coupled to the communication module and the connection interface, and is used for receiving a message synchronized from the terminal device through the connection interface, and transmitting message content of the message to at least one contact of the message through the communication module.

The present application provides a computer program product which comprises program instructions to be loaded into a mobile communication device to execute the aforementioned method for transmitting a message which comprises following steps. First, a terminal device is connected. Then, a message comprising at least one contact and message content is synchronized and received. Finally, the message is transmitted to each of the at least one contact.

According to the above descriptions, in the method, the system, the apparatus, and the computer program product for transmitting a message of the present application, the message edited on the terminal device by the user is synchronized to the mobile communication device, and the mobile communication device automatically sends the message according to contact information in the message when receiving the synchronized message, so as to edit the message through the terminal device instead of the mobile commutation device.

### BRIEF DESCRIPTION OF THE DRA WINGS

The accompanying drawings are included to provide a further understanding of the application, and are incorporated in and constitute a part of this specification. The drawings illustrate examples of the application and, together with the description, serve to explain the principles of the application.

FIG. 1 is a block diagram illustrating a system for transmitting a message according to an example of the application.

FIG. 2 is a flowchart illustrating a method for transmitting a message according to an example of the application.

FIG. 3 is an example of a message editing interface according to an example of the application.

FIG. 4 is a block diagram illustrating a system for transmitting a message according to an example of the application.

FIG. 5 is a flowchart illustrating a method for transmitting a message according to an example of the application.

FIGs. 6A, 6B and 6C are examples of a message browsing interface and a message editing interface according to an example of the application.

### DESCRIPTION OF THE EXAMPLES

In the application, an experience that a user edits a message on a mobile communication device is extended to a home computer, so that the user can use the computer to replace the mobile communication device to edit message in a home environment or an environment where a computer can be used. The edited message is transmitted to the mobile communication device in a synchronous manner, and then transmitted to contacts through the mobile communication device. In this way, convenience for editing messages is improved without increasing extra cost.

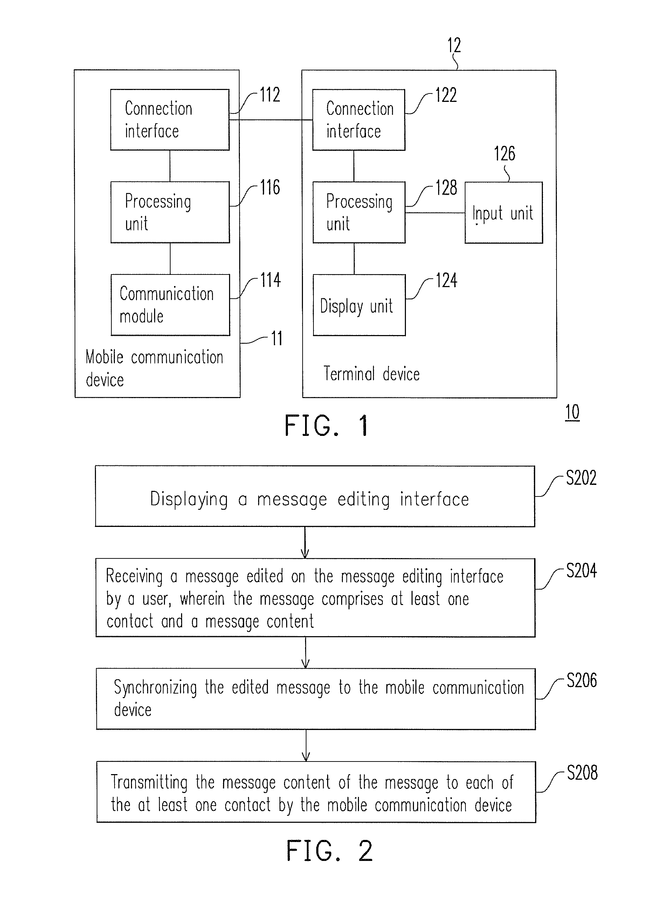

FIG. 1 is a block diagram illustrating a system for transmitting a message according to an example of the application. Referring to FIG. 1, the system 10 for transmitting a message comprises a mobile communication device 11 and a terminal device 12. The mobile communication device 11 is, for example, a mobile phone, a smart phone, or a personal digital assistant (PDA) phone capable of transmitting messages, and the terminal device 12 is, for example, a desk top computer, a notebook computer, a flat panel computer, or a vehicle computer equipped with a large screen and keyboard.

The mobile communication device 11 has a connection interface 112, a communication module 114, and a processing unit 116. The connection interface 112 is, for example, a cable interface such as a universal serial bus (USB), etc., or a wireless interface such as bluetooth, etc. The communication module 114 may, for example, support signal transmission of a global system for mobile communication (GSM), a personal handy-phone system (PHS), a code division multiple access (CDMA) system, a wireless fidelity (Wi-Fi) system or a worldwide interoperability for microwave access (WiMAX). The processing unit 116 is coupled to the communication module 114 and the connection interface 112, which is, for example, a central processing unit (CPU) or a programmable general purpose or special purpose microprocessor, a digital signal processor (DSP), a controller, an application specific integrated circuit (ASIC), a programmable logic device (PLD), or other similar device, or a combination thereof, which is used for processing all tasks of the mobile communication device 11.

The terminal device 12 comprises a connection interface 122, a display unit 124, an input unit 126, and a processing unit 128. The connection interface 122 is, for example, an interface corresponding to the connection interface 112. The display unit 124 is, for example, a liquid crystal display (LCD), a light-emitting diode (LED) display, a field emission display (FED), or other types of display. The input unit 126 is, for example, an input device such as a mouse, a keyboard, a joystick, or a touch panel, etc., which can receive an operation of a user, and the input unit 126 can also be a resistive, a capacitive, or other types of touch sensing device, which can be integrated with the display unit 124 to form a touch screen. The processing unit 128 is coupled to the connection interface 122, the display unit 124, and the input unit 126, which is, for example, a CPU, or a programmable general purpose or specific purpose microprocessor, a DSP, a controller, an ASIC, a PLD, or other similar device, or a combination thereof, which is used for processing all tasks of the terminal device 12.

The mobile communication device 11 and the terminal device 12 are connected through the connection interface 112 and the connection interface 122, and the terminal device 12 sends messages through the mobile communication device 11. An example is provided below to describe the method of transmitting a message of the application in detail.

FIG. 2 is a flowchart illustrating a method for transmitting a message according to an example of the application. Referring to FIG. 2, the method of the present example is suitable for the system 10 for transmitting a message of FIG. 1, and detailed steps of the method are described below with reference to various components of the system 10.

First, a message editing interface is displayed on the display unit 124 of the terminal device 12 (step S202), for providing the user to edit a message. The message editing interface is, for example, automatically displayed after the mobile communication device 11 wired or wireless connected with the terminal device 12; or automatically displayed after the mobile communication device 11 wired or wireless connected with the terminal device 12 and launches the message application, message sending application, or message editing application in the mobile communication device; or displayed after the user executes a message editing function on the terminal device 12, which is not limited by the application.

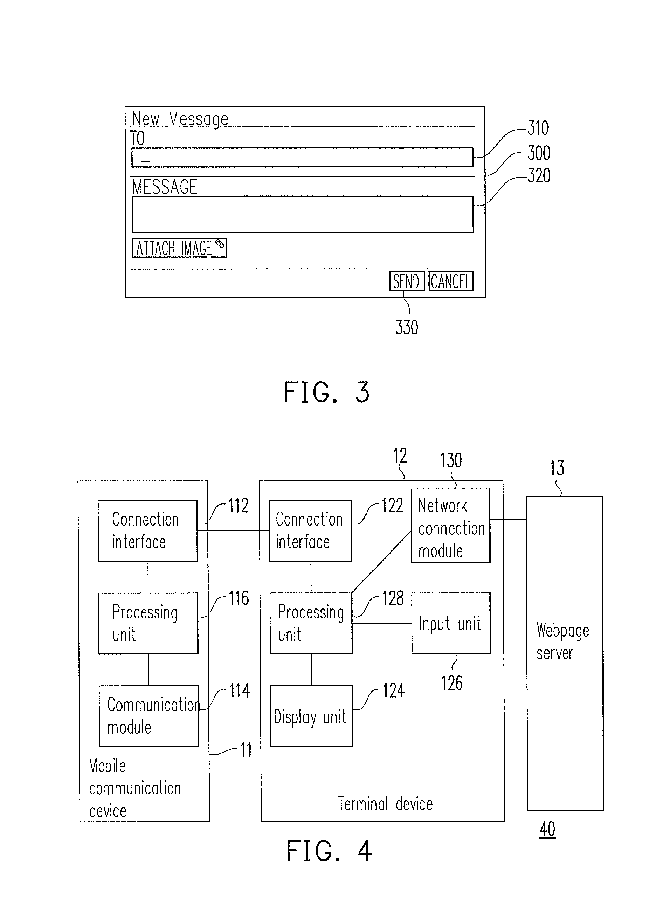

Then, the terminal device 12 receives the message edited on the message editing interface by the user through the input unit 126 (step S204), where the message edited by the user comprises at least one contact and message content. For example, FIG. 3 is an example of a message editing interface according to an example of the application. Referring to FIG. 3, the message editing interface 300, for example, displays a receiver field 310 and a text editing field 320 for the user to input contacts and edit the message content such as a text or a image, etc. In on example, the content of the message may be bland and not include any text, image, and another attachments.

When the user completes editing the message, the terminal device 12 synchronizes the edited message to the mobile communication device 11 through the connection interface 122 (step S206), for examples through a wireless network (for example, WiFi or WiMAX) or a mobile communication network (for example 2.5G, 3G, or 3.5G network). In an example, when the user presses a finish option or a sending option (for example, a sending option 330 of FIG. 3) displayed on the message editing interface, the terminal device 12 may immediately synchronize the edited message to the mobile communication device 11 for transmission. In another example, when the user presses the finish option or the sending option displayed on the message editing interface, the terminal device 12 does not immediately perform the synchronization, but synchronizes the edited message in a predetermined time or in a predetermined time interval.

After the mobile communication device 11 receives the message synchronized from the terminal device 12 through the connection interface 112, it transmits the message content of the message to the contacts through the communication module 114 (step S208). In detail, besides receiving external messages through the communication module 114, the mobile communication device 11 may also receive the synchronized message through the connection interface 112. When the mobile communication device 11 recognizes that the received message is the synchronized message, it automatically reads the contact information and the message content in the message, and activates the communication module 114 to send the message content to the one or more contacts.

It should be noticed that, in the above example, the message editing interface is, for example, provided by application software installed in the terminal device 12. In another example, the message editing interface may also be provided by a webpage server on a network, and an example is provided below for detail description.

FIG. 4 is a block diagram illustrating a system for transmitting a message according to an example of the application. Referring to FIG. 4, besides the mobile communication device 11 and the terminal device 12 of FIG. 1, the system 40 for transmitting a message of the present example further comprises a webpage server 13. The webpage server 13 is, for example, a server installed at a service end for providing a service to the user, such that the user can obtain the message editing interface used for editing the message through webpage connection.

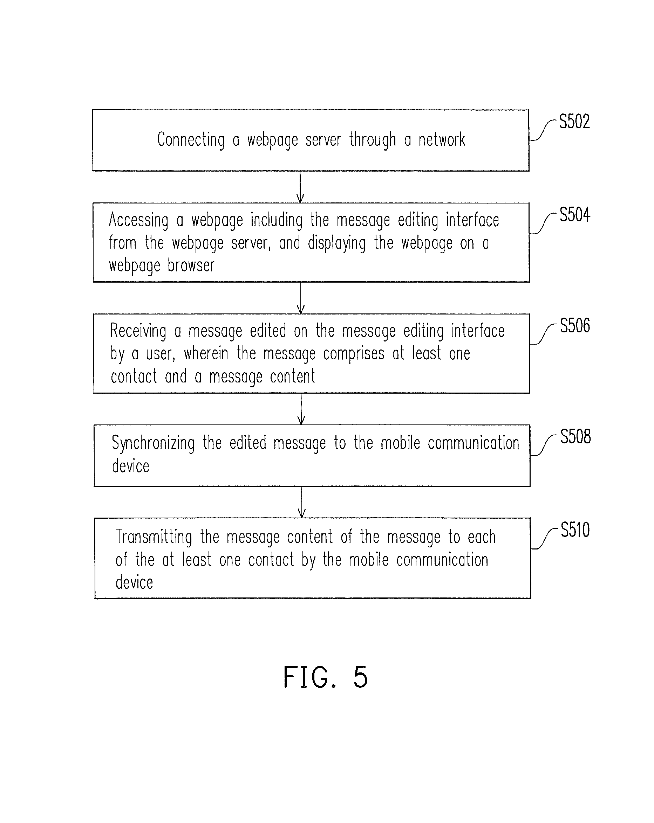

FIG. 5 is a flowchart illustrating a method for transmitting a message according to an example of the application. Referring to FIG. 5, the method of the present example is adapted to the system 40 for transmitting a message of FIG. 4, and detailed steps of the method are described below with reference to various components of the system 40.

First, the terminal device 12 connects the webpage server 13 through a network connection module 130 (step S502), accesses a webpage comprising the message editing interface from the webpage server 13, and displays the webpage on a webpage browser (step S504).

Then, the terminal device 12 receives a message edited on the message editing interface by the user through the input unit 126 (step S506). After the user completes editing the message, the terminal device 12 synchronizes the edited message to the mobile communication device 11 through the connection interface 122 (step S508).

Finally, after the mobile communication device 11 receives the message synchronized from the terminal device 12 through the connection interface 12, it transmits the message content of the message to the contacts through the communication module 114 (step 5510).

According to the above method, a communication service provider can provide the message editing interface to all of the users of the mobile communication device through a webpage without spending cost for providing software to the user, and it is unnecessary for the user to install extra software on the terminal device. Therefore, the method of the application can be extended to all of the users having the terminal device, and facilitate the users editing the messages.

It should be noticed that, besides the message editing interface, the webpage server 13 may also provide a message browsing interface for the user to browse messages on the mobile communication device. In detail, when the user connects the mobile communication device to the terminal device, the terminal device automatically accesses the messages stored on the mobile communication device, and displays the messages on the message browsing interface. The message browsing interface may, for example, distinguish different contacts and list message records between the user and each of the contacts. An adding option used for adding a new message or a reply option used for replying each of the messages may be configured on the message browsing interface. The user may launch the message editing interface by selecting one of these options for message editing.

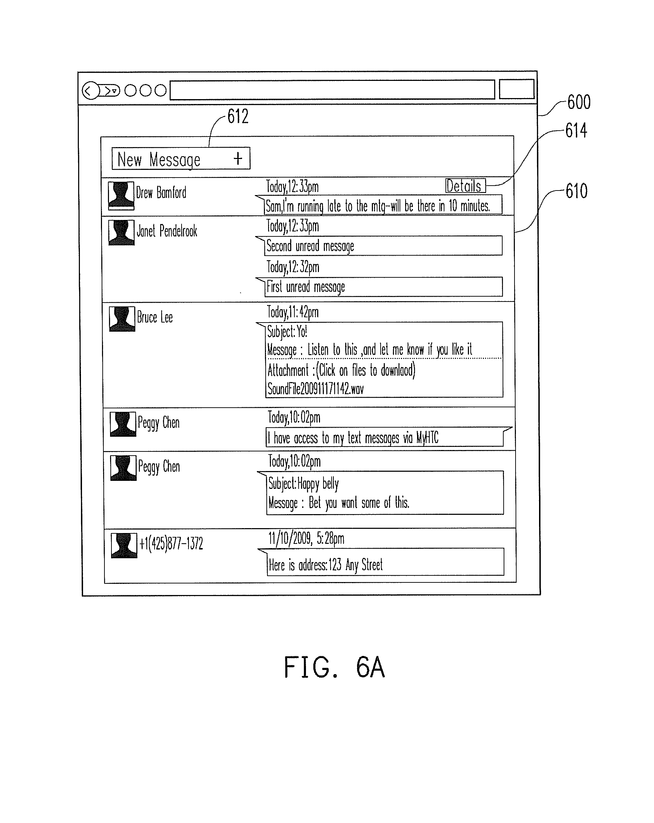

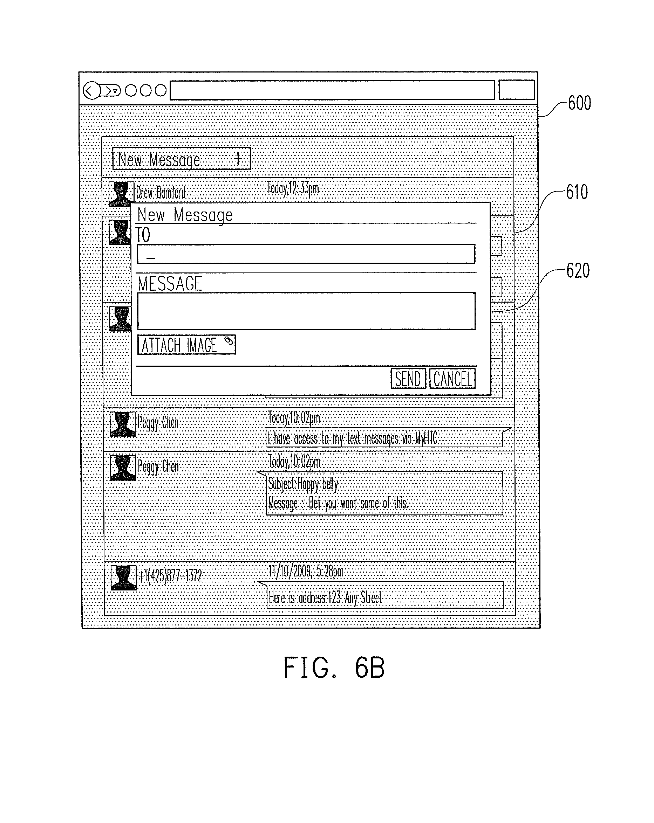

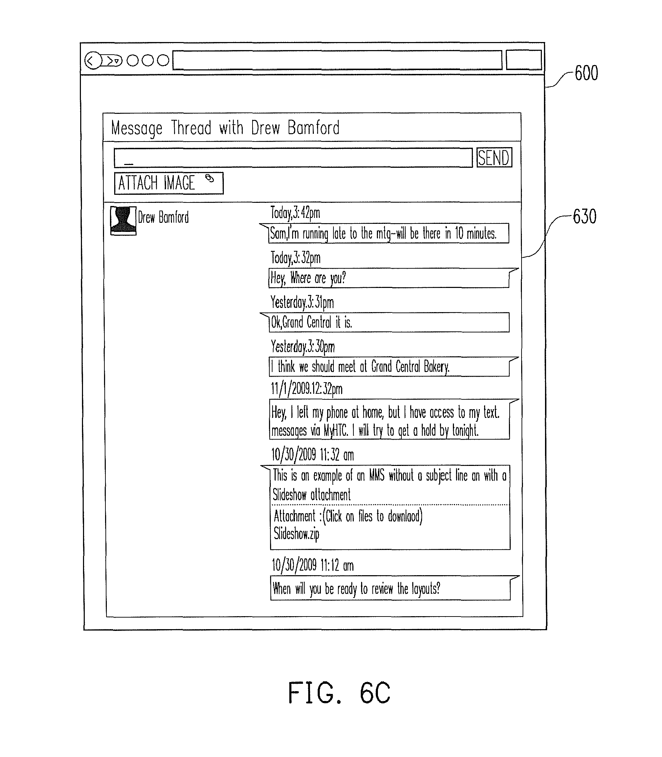

For example, FIGs. 6A, 6B, and 6C are examples of a message browsing interface and a message editing interface according to an example of the application. Referring to FIG. 6A, the message browsing interface 610 is, for example, displayed on a webpage browser 600 of the terminal device in a form of webpage. The message browsing interface 610, for example, lists the message records between the user of the mobile communication device and each of the contacts according to a time sequence of the messages transmitted by the mobile communication device. For example, a latest message received by the mobile communication device is sent by a contact named Drew Bamford at 3:42pm, today, so that the message record between the contact Drew Bamford and the user is displayed on the top of the message browsing interface 610, and deduced by analogy. The message browsing interface 610 further displays an option 612 for adding a new message. If the user selects the option 612, the terminal device may display a message editing interface 620 (shown in FIG. 6B) on the top of the message browsing interface 610 for the user to input a contact to be sent, message content, and an attached image or file, etc.

Furthermore, the message browsing interface 610 may further display an option 614 for browsing details in the field of the contact Drew Bamford for representing that more messages between the user and the contact Drew Bamford are still not displayed. If the user selects the option 614, the terminal device further displays a message browsing interface 630 (shown in FIG. 6C) to display historic message records between the user and the contact Drew Bamford. The message browsing interface 630 comprises a message editing field 632 on the top, by which the user can edit a message to reply the contact Drew Bamford.

The application provides a computer program product to be loaded into a mobile communication device to execute the aforementioned various steps of the method for transmitting a message. The computer program product is basically composed of a plurality of program instructions (for example, an organization chart establishing program instruction, a table approving program instruction, a setting program instruction, and a deployment program instruction, etc), and these program instructions are loaded into the mobile communication device and executed by the same to accomplish various steps of the method for transmitting the message and various functions of the mobile communication device described above.
In summary, in the method, the system, the apparatus, and the computer program product for transmitting a message of the application, the operation of editing the message is transferred to the terminal device having a large screen and keyboard, so as to facilitate the user editing the message. The edited message is synchronized to the mobile communication device having a message transmitting function for transmission. The message editing interface can be implemented in a form of webpage, so that the user can still use the message editing interface of the application without installing extra software, which increases utilization convenience.
In summary a method, a system, an apparatus, and a computer program product suitable for a terminal device to transmit a message through a mobile communication device are provided. In the present method, a message editing interface is displayed, and a message comprising at least one contact and message content, edited on the message editing interface by a user, is received. The edited message is then synchronized to the mobile communication device and the message is transmitted to each of the at least one contact in the message by the mobile communication device.

It will be apparent to those skilled in the art that various modifications and variations can be made to the structure of the application without departing from the scope or spirit of the application. In view of the foregoing, it is intended that the application cover modifications and variations of this application provided they fall within the scope of the following claims and their equivalents.

## Claims

1. A method for transmitting a message, adapted for a terminal device (12) to transmit the message through a mobile communication device (11), wherein the mobile communication device (11) is connected to the terminal device (12), the method comprising:
displaying (S202) a message editing interface (300, 620);
receiving (S204) a message edited on the message editing interface (300, 620), wherein the message comprises at least one contact and message content;
synchronizing (S206) the edited message to the mobile communication device (11); and
transmitting (S208) the message to each of the at least one contact by the mobile communication device (11).

2. The method of claim 1, wherein before the step of displaying the message editing interface (300, 620), the method further comprises:
accessing at least one message stored in the mobile communication device (11); and
displaying the accessed at least one message on a message browsing interface (610), wherein the message browsing interface (610, 630) comprises one or more of an adding option (612) used to add a new message and a reply option used to reply each of the at least one message.

3. The method of claim 1 or 2, wherein the step of displaying the message editing interface (300, 620) comprises:
connecting (S502) a webpage server (13) through a network; and
accessing (S504) a webpage comprising the message editing interface (300, 620) from the webpage server (13), and displaying the webpage on a webpage browser (600).

4. The method of any one of claims 1 to 3, wherein the step of synchronizing the edited message to the mobile communication device (11) comprises:
synchronizing the edited message to the mobile communication device (11) every a predetermined time.

5. The method of any one of claims 1 to 4, wherein the step of synchronizing the edited message to the mobile communication device (11) comprises:
immediately synchronizing the edited message to the mobile communication device (11) when receiving a select operation of a finish option in the message editing interface (300, 620) performed.

6. A method for transmitting a message, adapted for a mobile communication device (11), the method comprising:
connecting with a terminal device (12);
synchronizing and receiving a message, wherein the message comprises at least one contact and message content;
transmitting the message to each of the at least one contact.

7. A computer program product, comprising program instructions for executing the method for transmitting a message according to any one of claims 1 to 6.

8. A system for transmitting a message, comprising:
a mobile communication device (11), having a communication module (114);
and
a terminal device (12), comprising:
a connection interface (122), configured to connect the mobile communication device (11);
a display unit (124), configured to display a message editing interface (300, 620);
an input unit (126), configured to receive a message edited on the message editing interface (300, 620), wherein the message comprises at least one contact and message content; and
a processing unit (128), coupled to the connection interface (122), the display unit (124), and the input unit (126), configured to synchronize the edited message to the mobile communication device (11) through the connection interface (122),
wherein the mobile communication device (11) transmits the message content of the message to each of the at least one contact when receiving the message synchronized from the terminal device (12).

9. The system of claim 8, further comprising:
a webpage server (13), configured to provide a webpage comprising the message editing interface (300, 620).

10. The system of claim 9, wherein the terminal device (12) further comprises:
a network connection module (130), coupled to the processing unit (128), and connected to the webpage server (13) through a network, wherein the processing unit accesses the webpage comprising the message editing interface (300, 620) from the webpage server (13), and displays the webpage on a webpage browser (600).

11. The system of claim 10, wherein the webpage server (13) further provides a webpage comprising a message browsing interface (610, 630).

12. The system of claim 11, wherein, and the terminal device (12) connects to the webpage server (13) through the network connection module (130), accesses the webpage comprising the message browsing interface (610, 630) from the webpage server (13) and displays the webpage on the webpage browser (600), and accesses at least one message stored in the mobile communication device (11) through the connection interface (122) and displays the accessed at least one message on the message browsing interface (610, 630), wherein the message browsing interface (610, 630) comprises one or more of an adding option (612) used to add a new message and a reply option used to reply each of the at least one message.

13. The system of any one of claims 8 to 12, wherein the processing unit (128) immediately synchronizes the edited message to the mobile communication device (11) when the input unit (126) receives a select operation of a finish option in the message editing interface (300, 620) performed.

14. An apparatus for transmitting a message, comprising:
a communication module (114);
a connection interface (112), configured to connect a terminal device (12);
and
a processing unit (116), coupled to the communication module (114) and the connection interface (112), configured to receive a message synchronized from the terminal device (12) through the connection interface (112), and transmit message content of the message to at least one contact of the message through the communication module (114).

15. A system for transmitting a message, comprising:
a communication tool;
a connection tool, for connecting a terminal device (12); and
a processing tool coupled to the communication tool and the connection tool, for receiving a message synchronized from the terminal device (12) through the connection tool, and transmitting message content of the message to at least one contact of the message through the communication tool.
